# EUROPÄISCHE PATENTSCHRIFT

(11) **EP 1 926 418 B1**
(45) Veröffentlichungstag und Bekanntmachung des Hinweises auf die Patenterteilung: **15.08.2012**
(21) Anmeldenummer: 06778400.9
(22) Anmeldetag: 30.08.2006
(51) Int. Cl.: A47L 15/42, A47L 15/23, F16K 11/056

(54) **HAUSHALT-GESCHIRRSPÜLMASCHINE**
DOMESTIC DISHWASHER
LAVE-VAISSELLE ELECTROMENAGER

(30) Priorität: 09.09.2005 DE 102005043027
(43) Veröffentlichungstag der Anmeldung: 04.06.2008
(73) Patentinhaber: BSH Bosch und Siemens Hausgeräte GmbH, 81739 München (DE)
(72) Erfinder: JERG, Helmut, 89537 Giengen (DE)
(86) Internationale Anmeldenummer: PCT/EP2006/065818
(87) Internationale Veröffentlichungsnummer: WO 2007/028741

(56) Entgegenhaltungen:
- DE-A1- 2 707 663
- DE-U1- 8 707 121
- US-A- 3 552 437

## Beschreibung

Die Erfindung betrifft eine Haushalt-Geschirrspülmaschine mit einem Spülbehälter zur Aufnahme von Spülgut und mindestens zwei Sprüheinrichtungen zum Beaufschlagen des Spülguts mit von einer Umwälzpumpe geförderter Flüssigkeit, mit einer Umsteuereinrichtung mit einem Flüssigkeitseinlass und jeweils an eine der Sprüheinrichtungen angeschlossenen Flüssigkeitsauslässen sowie einem beweglichen Ventilkörper, der in der Flüssigkeit in Verschlussstellungen zum Verschließen der Flüssigkeitsauslässe gelenkt werden kann.

In einem Spülbehälter einer handelsüblichen Haushalt-Geschirrspülmaschine wird vorzugsweise in Geschirrkörben angeordnetes Spülgut mit einer von einer Umwälzpumpe geförderten Flüssigkeit über mindestens zwei Sprüheinrichtungen beaufschlagt. Die Beschickung der beispielsweise beiden Sprüheinrichtungen mit der Flüssigkeit erfolgt entweder gleichzeitig oder abwechselnd, wobei die zuletzt genannte Methode durch den auf lediglich eine Sprüheinrichtung wirkenden vollen Druck ein besseres Reinigungsergebnis liefert und eine geringere Flüssigkeitsmenge und einen geringeren Energieaufwand für das Umwälzen und Erwärmen der Flüssigkeit benötigt. Zur Durchführung der wechselweisen Beschickung der Sprüheinrichtungen wird eine Umsteuereinrichtung - üblicherweise als Wasserweiche bezeichnet - verwendet.

Aus der DE 199 47 323 A1 ist eine Umsteuereinrichtung für eine Geschirrspülmaschine bekannt, bei der der Ventilkörper von einer der Verschlussstellungen bei Betrieb der Umwälzpumpe in eine stabile Zwischenstellung bei Abschalten der Umwälzpumpe zurückbewegt wird und von dort bei Wiederaufnahme des Betriebs der Umwälzpumpe in eine der Verschlussstellungen gelenkt wird. Die stabile Zwischenstellung sorgt für eine definierte Lage des Ventilkörpers bei Pumpenstillstand, von der aus bei erneutem Pumpenbetrieb eine der möglichen Verschlussstellungen wieder eingenommen wird. Da der Ventilkörper durch die Schwerkraft bei ruhender Flüssigkeit bekanntermaßen absinkt, bewirkt die stabile Zwischenstellung ein Anhalten des Ventilkörpers und verhindert damit sicher und insbesondere unabhängig vom Vorliegen einer bestimmten Flüssigkeitssäule und/oder einem Zeitfenster für die Wiederaufnahme des Pumpenbetriebs das weitere Absinken. Durch die stabile Zwischenstellung wird in vorteilhafter Weise der vom Ventilkörper in die Verschlussstellung zurückzulegende Weg bei erneuter Aktivierung des Pumpenbetriebs verkürzt. Ein Nachteil dieser Anordnung besteht darin, dass das Verschließen der Flüssigkeitsauslässe nicht in beliebiger Weise erfolgen kann, sondern ein Verschließen lediglich in wechselnder Reihenfolge möglich ist. Um nach einem Pumpenstillstand den gleichen Flüssigkeitsauslass wieder verschließen zu können, muss der Ventilkörper zunächst von seiner stabilen Zwischenstellung in Richtung des anderen Flüssigkeitsauslasses durch Inbetriebnahme der Pumpe und sofortigen Pumpenstillstand gebracht werden, um nach erneuter Inbetriebnahme der Pumpe den ursprünglichen Flüssigkeitsauslass wieder verschließen zu können.

Eine weitere Umsteuereinrichtung zum Umschalten eines Fluidstroms ist aus der DE 87 07 121 U1 bekannt, welcher einer Einlassöffnung des Ventils über einen steuerbaren Strömungskreis zuführbar ist. Diese weist wenigstens einen ersten und eine zweiten Auslass auf, welche wahlweise mittels wenigstens eines im Ruhezustand in einer stabilen Lage nahe der Einlassöffnung verharrenden Absperrelements verschließbar sind. Durch ein wahlweise zwischen einer ersten und einer zweiten Stellung bewegbares, als eine Führung für das Absperrelement wirksames Steuerglied, ist das Absperrelement, z.B. in Form einer Kugel, im Betrieb des Strömungskreises in eine instabile Lage zum Verschließen der ersten bzw. der zweiten Auslassöffnung lenkbar. Im Ruhezustand, d.h. solange die mit dem Ventil verbundene Strömungsquelle nicht in Betrieb ist, verharrt die Kugel unter Schwerkrafteinfluss in einer Lage nahe dem Einlass. Das Steuerglied mit einem in einem oberen Teil des Innenraums der Umsteuereinrichtung angeordneten Körper ist waagerecht zwischen Stellungen zunächst den Auslässen hin und her bewegbar. An der Unterseite des Körpers sind an einander gegenüberliegenden Seiten Vertiefungen ausgebildet, welche als entsprechende Sitzbereiche für die Kugel wirksam sind. Wird die Strömungsquelle in Betrieb gesetzt, so hebt das über den Einlass in das Ventil einströmende Fluid die Kugel an. Die Vertiefung des Körpers wirkt als Führung, um die Kugel zu einer bestimmten Auslassöffnung zu lenken, so dass diese verschlossen wird. Dementsprechend tritt der Fluidstrom durch den anderen Auslass aus der Umsteuereinrichtung aus. Bei einer Unterbrechung des durch den Einlass eintretenden Fluidstroms fällt die Kugel schließlich unter Schwerkrafteinfluss in ihre Ausgangsstellung zurück.

Es ist Aufgabe der vorliegenden Erfindung, eine Haushalt-Geschirrspülmaschine mit einer einfachen, kostengünstigen funktionssicheren Umsteuereinrichtung zur Beschickung mehrerer Sprüheinrichtungen zu schaffen.

Diese Aufgabe wird gemäß der Erfindung durch die Merkmale des Patentanspruches 1 gelöst. Weiterbildungen der Erfindung sind in den abhängigen Patentansprüchen angegeben.

Eine erfindungsgemäße Haushalt-Geschirrspülmaschine weist eine Spülbehälter zur Aufnahme von Spülgut und mindestens zwei Sprüheinrichtungen zum Beaufschlagen des Spülguts mit von einer Umwälzpumpe geförderter Flüssigkeit, eine Umsteuereinrichtung mit einem Flüssigkeitseinlass und jeweils an eine der Sprüheinrichtungen angeschlossenen Flüssigkeitsauslässen auf sowie einem beweglichen Ventilkörper, der von der Flüssigkeit in Verschlussstellungen zum Verschließen der Flüssigkeitsauslässe gelenkt werden kann und die Umsteuereinrichtung ein Steuerglied aufweist, das zwischen einer ersten und einer zweiten Stellung bewegbar ist und dadurch wahlweise jeweils einer der Flüssigkeitsauslässe durch eine instabile Lage des Ventilkörpers verschlossen werden kann, wobei
der Ventilkörper aus einer ersten oder einer zweiten Ruheposition in die Verschlussstellungen zum Verschließen eines der Flüssigkeitsauslässe lenkbar ist.

Das steuerbare Steuerglied ermöglicht ein selektives Verschließen eines der Flüssigkeitsauslässe. Das Verschließen eines Flüssigkeitsauslasses erfolgt dabei durch Inbetriebnahme der Umwälzpumpe, wodurch der Ventilkörper aufgrund der Flüssigkeitsströmung von einer durch das steuerbare Steuerglied festgelegten Ruheposition in einen der Ruheposition zugeordneten Flüssigkeitsauslass gelenkt wird. Durch Ansteuerung des Steuerglieds durch eine Programmsteuereinheit der Haushalt-Geschirrspülmaschine kann eine beliebige Abfolge festgelegt werden, welche der Flüssigkeitsauslässe zu verschließen sind.

Vorzugsweise ist mittels des Steuergliedes der Ventilkörper zwischen der ersten und der zweiten Ruheposition bewegbar.

In einer weiteren Ausführungsform dient das Steuerglied als Führung für den Ventilkörper.

In einer weiteren Ausgestaltung ist das Steuerglied als eine drehbar im Gehäuse angeordnete Wippe ausgebildet, die dazu geeignet ist, den Ventilkörper bei nachlassenden, geringen oder nicht vorhandenen Flüssigkeitsstrom von einer Ruheposition in eine andere Ruheposition zu leiten, um einen bestimmten Flüssigkeitsauslass in Abhängigkeit von der Ruheposition zu verschließen.

Gemäß einer Variante der Erfindung kann zum Ändern der Verschlussstellung die Umsteuereinrichtung vor dem Ansteuern der Umwälzpumpe in der Weise betätigt werden, dass diese von der ersten in die zweite Stellung oder umgekehrt wechselt. Das Ansteuern der Umwälzpumpe erfolgt bevorzugt in einer Phase, in der der Ventilkörper einen der Flüssigkeitsauslässe aufgrund des in der Umsteuereinrichtung wirkenden Flüssigkeitsstromes verschließt. Durch Betätigen des Steuerglieds wird der Ventilkörper bei nachlassendem Flüssigkeitsstrom von dem Flüssigkeitsauslass zu der dem anderen Flüssigkeitsauslass zugeordneten Ruheposition gelenkt. Bei Wiederinbetriebnahme der Umwälzpumpe und ansteigendem Flüssigkeitsstrom wird der Ventilkörper von der Ruhestellung zum anderen Flüssigkeitsauslass gelenkt. Zum Verschließen des ersten Flüssigkeitsauslasses erfolgt das Vorgehen ebenfalls in der beschriebenen Vorgehensweise.

Eine andere Ausgestaltung der erfindungsgemäßen Geschirrspülmaschine sieht vor, dass das Gehäuse der Umsteuereinrichtung mit Führungsbereichen versehen ist, welche den Ventilkörper von der ersten Ruheposition in den ersten Flüssigkeitsauslass und von der zweiten Ruheposition in den zweiten Flüssigkeitsauslass leitet. Dabei ist es bevorzugt, wenn die Führungsbereiche nahe den Ruhepositionen stärker ausgeprägt sind im Vergleich zu einem Bereich nahe den Flüssigkeitsauslässen.

Vorzugsweise ist der Ventilkörper kugelförmig ausgebildet, um eine leichtere Bewegbarkeit zwischen den Runepositionen und/oder Verschlußstellungen zu ermöglichen.

In einer vorteilhaften Ausführungsform besteht der Ventilkörper wenigstens außenseitig aus einem elastischen Material, um den Ventilsitz mit dem Ventilkörper besser abdichten zu können.

In einer bevorzugten Ausgestaltung erfolgt die Ansteuerung des Steuerglieds der Umsteuereinrichtung elektromagnetisch. Diese Vorgehensweise hat den Vorteil, dass das Gehäuse der Umsteuereinrichtung keinen besonderen Dichtmaßnahmen unterworfen werden muss, da keinerlei mechanische Teile zum Ansteuern des Steuerglieds von außen in das Innere der Umsteuereinrichtung geführt werden müssen. Da das Steuerglied lediglich zwei Positionen annehmen kann, gestaltet sich die konstruktive Ausführung besonders einfach, indem ein Elektromagnet außerhalb der Umsteuereinrichtung und ein an dem Steuerglied befestigter Permanentmagnet angebracht werden. Zum Ändern der Stellung des Steuergliedes ist lediglich eine kurzzeitige Ansteuerung nötig, wodurch eine energieeffiziente Ansteuerung geschaffen ist. Weiterhin geht die Ansteuerung mehr oder minder vollkommen geräuschlos vonstatten.

In einer Ausgestaltung ist als Rückstellelement des Steuerglieds der Umsteuereinrichtung in eine Ausgangsstellung eine Feder oder ein Dauermagnet vorgesehen. Hierdurch ist gewährleistet, dass das Steuerglied ohne Ansteuerung des Elektromagneten in einer Ausgangsstellung, z.B. der ersten Stellung, verharrt. Um das Steuerglied in die zweite Stellung zu bringen, ist eine Ansteuerung des Steuerglieds notwendig. Soll dieses in der zweiten Stellung gehalten werden, so ist eine permanente Ansteuerung notwendig. Da das Steuerglied jedoch nur dazu benötigt wird, um den Ventilkörper zum gewünschten Flüssigkeitsauslass zu leiten, ist es ausreichend, das Steuerglied lediglich kurzzeitig anzusteuern. Das Rückstellelement sorgt dann dafür, dass dieses in die Ausgangsstellung zurück bewegt wird.

Um ein sicheres Verschließen des Flüssigkeitsauslasses mit dem Ventilkörper sicherzustellen, sind an den Wänden der Umsteuereinrichtung im Bereich der ersten und der zweiten Zwischenstellung Nasen ausgebildet, die ein Anlegen des Ventilkörpers an die Wände der Umsteuereinrichtung verhindern. Üblicherweise legt sich an den Wänden der Umsteuereinrichtung über einen längeren Zeitraum Schmutz an. Dieser kann durch die Ventilkörper aufgenommen werden, wodurch sich dessen Oberfläche aufrauht, so dass gegebenenfalls eine nicht genügende Dichtigkeit am Flüssigkeitsauslass die Folge ist. Um ein Anlagern von Schmutz an den Ventilkörper zu verhindern, ist es ausreichend, an den Wänden der Umsteuereinrichtung im Bereich der Ruheposition Nasen auszubilden.

Die Erfindung wird nachfolgend anhand den Figuren näher erläutert. Es zeigen:
- Fig. 1: eine Haushalt-Geschirrspülmaschine in einer schematischen Darstellung,
- Fig. 2: einen Schnitt durch eine erfindungsgemäße Umsteuereinrichtung der Haushalt-Geschirrspülmaschine,
- Fig. 3: eine Seitenansicht der in Fig. 2 dargestellten Umsteuereinrichtung, und
- Fig. 4: eine weitere Schnittdarstellung durch die in Fig. 2 gezeigte Umsteuereinrichtung, in der eine Steuereinrichtung in der zweiten Stellung dargestellt ist.

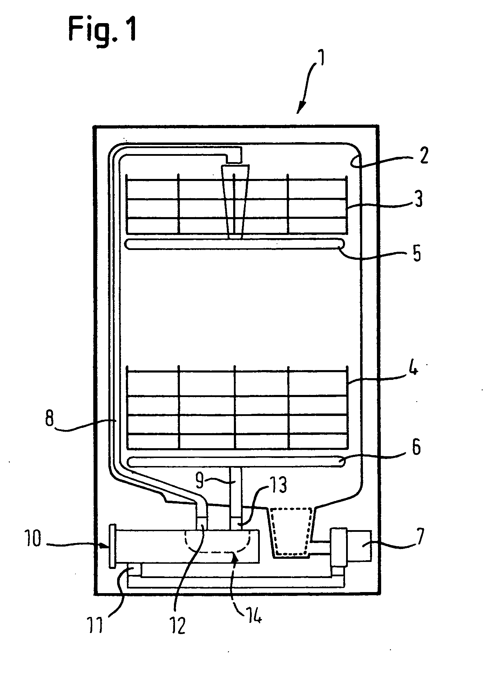

Figur 1 zeigt eine erfindungsgemäße Haushalt-Geschirrspülmaschine 1, die einen Spülbehälter 2 zur Aufnahme von Spülgut - üblicherweise verschmutztes Geschirr und Besteck - aufweist, das beispielsweise in einem Geschirroberkorb 3 und einem Geschirrunterkorb 4 eingeordnet ist. In dem Spülbehälter 2 sind zumindest zwei Sprüheinrichtungen zum Beaufschlagen des Spülguts mit einer Flüssigkeit angeordnet. Die Flüssigkeit - üblicherweise als Spülflotte bezeichnet - kann von einer Umwälzpumpe 7 über eine Flüssigkeitszuleitung 8 zu einem oberen Sprüharm 5 und über eine Flüssigkeitszuleitung 9 zu einem unteren Sprüharm 6 gefördert werden.
Üblicherweise wird diese Flüssigkeit zumindest in einem Teilprogrammschritt eines Spülprogramms der Haushalt-Geschirrspülmaschine 1 durch einen Durchlauferhitzer 10 erwärmt, der mit einem Eingangsstutzen 11 an die Umwälzpumpe 7 und mit Ausgangsstutzen 12, 13 an die Flüssigkeitszuleitungen 8, 9 angeschlossen ist. Die Anzahl der Ausgangsstutzen entspricht der Anzahl der Sprüheinrichtungen oder gleichzeitig betriebener Gruppen von Sprüheinrichtungen. Die von der Umwälzpumpe 7 geförderte Flüssigkeit wird demnach indem Ausführungsbeispiel zum Eingangsstutzen 11 des Durchlauferhitzers 10 und von dessen Ausgangsstutzen 12, 13 über die Flüssigkeitszuleitungen 8, 9 zu den Sprüheinrichtungen 5, 6 geleitet.

Mittels einer an dem Durchlauferhitzer 10 angeformten - oder darin angeordneten - Umsteuereinrichtung 14 können die Sprüheinrichtungen 5, 6 jeweils einzeln oder gleichzeitig mit der Flüssigkeit beschickt werden, wobei ersteres durch Öffnen eines Flüssigkeitsauslasses und durch Verschließen des anderen Flüssigkeitsauslasses erzielt wird. Die Flüssigkeitsauslässe 17, 18 der Umsteuereinrichtung 14 gehen im vorliegenden Ausführungsbeispiel direkt in die Ausgangsstutzen 12, 13 über oder sind mit diesen identisch. Des weiteren weist die Umsteuereinrichtung 14 einen Flüssigkeitseinlass 16 auf, der sich im vorliegenden Ausführungsbeispiel an den Eingangsstutzen 11 anschließt oder von diesem gebildet wird. Zum Verschließen der Flüssigkeitsauslässe 17, 18 kann ein beweglicher Ventilkörper 15 von der Flüssigkeit in entsprechende Verschlussstellungen C, D gelenkt werden. Gemäß weiterer Varianten kann die Umsteuereinrichtung 14 in der Haushalt-Geschirrspülmaschine entweder für sich allein angeordnet oder unmittelbar an die Umwälzpumpe 7 angeschlossen sein.

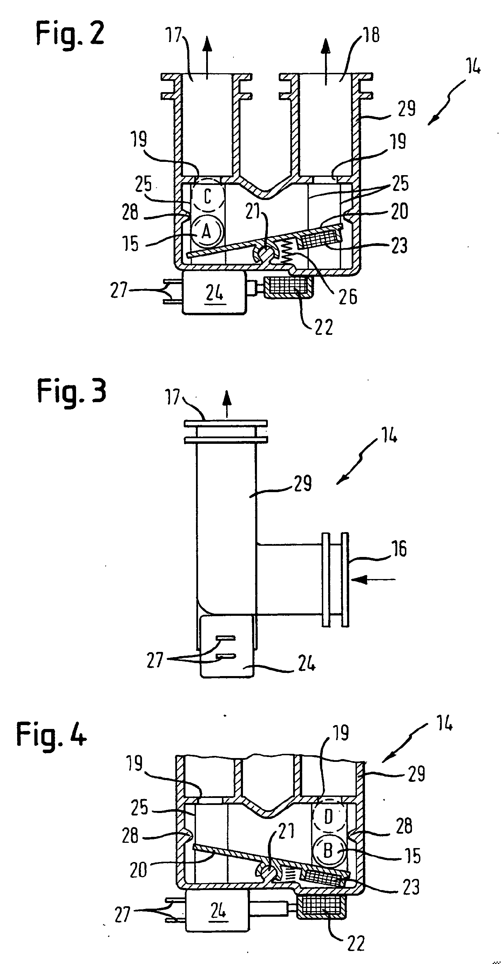

Figur 2 zeigt in einer Schnittdarstellung die Umsteuereinrichtung 14 der Haushalt-Geschirrspülmaschine 1 aus Fig. 1. Die Umsteuereinrichtung 14 weist ein Gehäuse 29 mit einer vorzugsweise U-förmig ausgebildeten Gehäusewand auf, das unten in der Nähe des Bodens den Flüssigkeitseinlass 16 und oben am Dach die beiden Flüssigkeitsauslässe 17, 18 aufweist. Die Flüssigkeitsauslässe 17, 18 verlaufen im vorliegenden Ausführungsbeispiel parallel zueinander. Durch den links angeordneten Flüssigkeitsauslass 17 wird bei Betrieb der Umwälzpumpe die Flüssigkeit in die Flüssigkeitszuleitung beispielsweise für den oberen Sprüharm 5 gepumpt, während der rechts angeordnete Flüssigkeitsauslass 18 zur Beförderung der Flüssigkeit in die Flüssigkeitszuleitung beispielsweise für den unteren Sprüharm 6 vorgesehen ist. Eine beispielhaft mögliche Anordnung des Flüssigkeitseinlasses 16 geht deutlicher aus der Fig. 3 hervor, welche die Umsteuereinrichtung 14 aus Fig. 2 in einer Seitenansicht zeigt. Der seitliche Flüssigkeitseinlass 16 ist im wesentlichen, wie durch die nachfolgende Beschreibung näher deutlich werden wird, durch außerhalb des Gehäuses der Umsteuereinrichtung am Boden angeordnete Funktionselemente bedingt.

Innerhalb des Gehäuses 29 ist ein vorzugsweise kugelförmig ausgebildeter Ventilkörper 15, dessen Dichte größer als die Dichte der Flüssigkeit ist, frei beweglich angeordnet. Dieser Ventilkörper 15 kann verschiedene Verschlussstellungen C (Fig. 2) und D (Fig. 4) zum Verschließen der Flüssigkeitsauslässe 17, 18 einnehmen, wobei sich die Verschlussstellung C am Flüssigkeitsauslass 17 sowie die Verschlussstellung D am Flüssigkeitsauslass 18 befinden. Der Ventilkörper 15 besteht vorzugsweise zumindest an seiner Oberfläche aus elastischem Material, um eine gute Abdichtung des jeweiligen Flüssigkeitsauslasses bei Einnahme der Verschlussstellungen C, D, angrenzend an Ventilsitze 19, zu erreichen.

Die Umsteuereinrichtung 14 weist ein steuerbares Steuerglied in Form einer Wippe 20 auf, welche drehbar (Drehlager 21) am Boden des Gehäuses der Umsteuereinrichtung gelagert ist. Die Wippe 20 ist beispielhaft auf ihrer rechten Seite mit einem Permanentmagneten 23 und einer Feder 26 als Rückstelleinrichtung versehen. Außerhalb am Boden des Gehäuses 29 angeordnet ist eine Spule 24 mit Kontakten 27, welche mit einem Elektromagneten 22 verbunden ist.

In Fig. 2 ist die Umsteuereinrichtung 14 in einer ersten Stellung, welche als Ausgangsstellung bezeichnet wird, dargestellt. Der Ventilkörper 15 ruht dabei in einer Ruheposition A, solange die Umwälzpumpe keine Flüssigkeit durch die Umsteuereinrichtung fördert. Um ein Anlegen des Ventilkörpers 15 an die Gehäusewand der Umsteuereinrichtung zu verhindern, ist weiterhin im Bereich der Ruheposition A eine Nase 28 an der Wand angeformt. Dadurch wird vermieden, dass an der Gehäusewand angelagerter Schmutz sich auf den Ventilkörper 15 überträgt, wodurch dessen Dichteigenschaften in dem Ventilsitz 19 beeinträchtigt werden könnten. In der in Fig. 2 gezeigten Position ist der Elektromagnet 22 stromlos. Dies bedeutet, es erfolgt keine Ansteuerung der Wippe 20.

Mit dem Einschalten der Umwälzpumpe saugt diese im Betriebszustand Flüssigkeit an und pumpt sie durch den Durchlauferhitzer 10 über den Flüssigkeitseinlass 16 in das Gehäuse der Umsteuereinrichtung 14. Der Ventilkörper 15, vorzugsweise kugelförmig ausgebildet, wird in der in Fig. 2 gezeigten Stellung bei Betrieb der Umwälzpumpe durch die Strömung der Flüssigkeit zunächst von der Ruheposition A entlang von Führungen 25 in die Verschlussstellung C unterhalb des linken Ventilsitzes 19 gelenkt. Solange die Umwälzpumpe in Betrieb bleibt, verharrt der Ventilkörper 15 in dieser Stellung.

Um nun den Flüssigkeitsauslass 18 zu verschließen, wird die Wippe 20 durch Ansteuern des Elektromagneten 22 in die in Fig. 4 gezeigte Stellung gebracht. Anschließend wird die Umwälzpumpe außer Betrieb genommen oder ihre Drehzahl reduziert, so dass der Ventilkörper 15 aus der Verschlussstellung C über die Wippe 20 in die Ruheposition B (Fig. 4) gleiten kann. Durch Wiederinbetriebnahme der Umwälzpumpe oder Erhöhen der Drehzahl auf Nenndrehzahl wird der Ventilkörper durch die Strömung der Flüssigkeit von der Ruheposition B in die Verschlussposition D längs der dort ebenfalls ausgebildeten Führung 25 gelenkt. Sobald der Ventilkörper 15 die Verschlussstellung D erreicht hat, kann der Elektromagnet 22 wieder stromlos geschalten werden, so dass die Wippe aufgrund der Rückstellkraft der Feder 26 in die in Fig. 2 gezeigte erste Stellung (Ausgangsstellung) zurück schwingt.

In einer anderen, nicht dargestellten Ausgestaltung könnte die Rückstellkraft anstatt durch eine Feder auch durch einen Permanentmagneten ausgebildet sein. Vorzugsweise würde ein zweipoliger, an der Wippe befestigter Magnet zum Einsatz kommen, wobei dieser bei nicht betätigter Spule abgestoßen würde und bei betätigter Spule durch den Elektromagneten angezogen würde.

Die elektromagnetische Ansteuerung weist den Vorteil auf, dass das Gehäuse nicht besonders abgedichtet werden muss, da keine beweglichen Teile von außen in das Innere des Gehäuses geführt werden müssen. Da die Ansteuerung der Wippe lediglich zu kurzen Momenten erfolgen muss, ergibt sich darüber hinaus eine energieeffiziente Anordnung, welche bei ihrer Betätigung darüber hinaus nur wenig Geräusch emittiert.

### Bezugszeichenliste

- 1: Geschirrspülmaschine
- 2: Spülbehälter
- 3: Geschirroberkorb
- 4: Geschirrunterkorb
- 5: Sprüharm
- 6: Sprüharm
- 7: Umwälzpumpe
- 8: Flüssigkeitszuleitung
- 9: Flüssigkeitszuleitung
- 10: Durchlauferhitzer
- 11: Eingangsstutzen
- 12: Ausgangsstutzen
- 13: Ausgangsstutzen
- 14: Umsteuereinrichtung
- 15: Ventilkörper
- 16: Flüssigkeitseinlass
- 17: Flüssigkeitsauslass
- 18: Flüssigkeitsauslass
- 19: Ventilsitz
- 20: Wippe
- 21: Drehlager
- 22: Magnet
- 23: Magnet
- 24: Spule (elektr. ansteuerbar)
- 25: Führung
- 26: Feder
- 27: Kontakt
- 28: Nase
- 29: Gehäuse
- A, B: Ruheposition
- C, D: Verschlussstellung

## Patentansprüche

1. Haushalt-Geschirrspülmaschine (1) mit
- einem Spülbehälter (2) zur Aufnahme von Spülgut und mindestens zwei Sprüheinrichtungen (5,6) zum Beaufschlagen des Spülguts mit von einer Umwälzpumpe (7) geförderten Flüssigkeit,
- einer Umsteuereinrichtung (14) mit einem Flüssigkeitseinlass (16) und jeweils an eine der Sprüheinrichtungen angeschlossenen Flüssigkeitsauslässen (17,18) sowie
- einem beweglichen Ventilkörper (15), der von der Flüssigkeit in Verschlussstellungen (19) zum Verschließen der Flüssigkeitsauslässe (17,18) gelenkt werden kann und
- die Umsteuereinrichtung (14) ein Steuerglied (20) aufweist, das zwischen einer ersten und einer zweiten Stellung bewegbar ist und dadurch wahlweise jeweils einer der Flüssigkeitsauslässe (17, 18) durch eine instabile Lage (C, D) des Ventilkörpers (15) verschlossen werden kann,
**dadurch gekennzeichnet, dass**
der Ventilkörper (15) aus einer ersten oder einer zweiten Ruheposition (A, B) in die Verschlussstellungen (19) zum Verschließen eines der Flüssigkeitsauslässe (17, 18) lenkbar ist.

2. Geschirrspülmaschine nach Anspruch 1, **dadurch gekennzeichnet, dass** mittels des Steuergliedes (20) der Ventilkörper (15) zwischen der ersten und der zweiten Ruheposition (A, B) bewegbar ist.

3. Geschirrspülmaschine nach Anspruch 1 oder 2, **dadurch gekennzeichnet, dass** das Steuerglied (20) als Führung für den Ventilkörper (15) dient.

4. Geschirrspülmaschine nach einem der vorhergehenden Ansprüche, **dadurch gekennzeichnet, dass** das Steuerglied (20) als eine drehbar im Gehäuse (29) angeordnete Wippe (20) ausgebildet ist, die dazu geeignet ist, den Ventilkörper (15) bei nachlassenden, geringen oder nicht vorhandenen Flüssigkeitsstrom von der Ruheposition (A, B) in eine andere Ruheposition (A, B) zu leiten, um einen bestimmten Flüssigkeitsauslass (17,18) in Abhängigkeit von der Ruheposition (A, B) zu verschließen.

5. Geschirrspülmaschine nach einem der vorhergehenden Ansprüche, **dadurch gekennzeichnet, dass** das Gehäuse der Umsteuereinrichtung (14) mit Führungsbereichen (25) versehen ist, welche den Ventilkörper (15) von der ersten Ruheposition (A) in den ersten Flüssigkeitsauslass (17) und von der zweiten Ruheposition in den zweiten Flüssigkeitsauslass (18) leiten.

6. Geschirrspülmaschine nach einem der vorhergehenden Ansprüche, **dadurch gekennzeichnet, dass** der Ventilkörper (15) kugelförmig ausgebildet ist.

7. Geschirrspülmaschine nach einem der vorhergehenden Ansprüche, **dadurch gekennzeichnet, dass** der Ventilkörper (15) wenigstens außenseitig aus einem elastischen Material besteht, um den Ventilsitz (19) mit dem Ventilkörper (15) besser abdichten zu können.

8. Geschirrspülmaschine nach einem der vorhergehenden Ansprüche, **dadurch gekennzeichnet, dass** die Ansteuerung des Steuerglieds elektromagnetisch erfolgt.

9. Geschirrspülmaschine nach einem der vorhergehenden Ansprüche, **dadurch gekennzeichnet, dass** als Rückstellelement des Steuerglieds in eine Ausgangsstellung eine Feder (26) oder ein Dauermagnet vorgesehen ist.

10. Geschirrspülmaschine nach einem der vorhergehenden Ansprüche, **dadurch gekennzeichnet, dass** an den Wänden der Umsteuereinrichtung im Bereich der ersten und der zweiten Ruheposition (A,B) Nasen (28) ausgebildet sind, die ein Anlegen des Ventilkörpers (15) an die Wände der Umsteuereinrichtung verhindern.

## Claims

1. Domestic dishwasher (1) comprising
- a rinsing container (2) for receiving articles to be rinsed and at least two spray devices (5, 6) for acting on the articles, which are to be rinsed, by liquid conveyed by a circulating pump (7),
- a rerouting device (14) with a liquid inlet (16) and respective liquid outlets (17, 18) each connected with one of the spray devices as well as
- a movable valve body (15), which can be guided by the liquid into closing settings (19) for closing the liquid outlets (17, 18), and
- the rerouting device (14) comprises a control element (20), which is movable between a first setting and a second setting and can thereby selectably close in each instance a respective one of the liquid outlets (17, 18) through an unstable position (C, D) of the valve body (15),
**characterised in that** the valve body (15) can be guided from a first rest position (A) or a second rest position (B) into the closing settings (19) for closing one of the liquid outlets (17).

2. Dishwasher according to claim 1, **characterised in that** the valve body (15) is movable between the first and second rest positions (A, B) by means of the control element (20).

3. Dishwasher according to claim 1 or 2, **characterised in that** the control element (20) serves as a guide for the valve body (15).

4. Dishwasher according to any one of the preceding claims, **characterised in that** the control element (20) is constructed as a rocker (20), which is arranged in the housing (29) to be rotatable and which is suitable for the purpose of guiding the valve body (15) from the rest position (A, B) into another rest position (A, B), in the case of a diminishing, a small or an absent liquid flow, in order to close a specific liquid outlet (17, 18) in dependence on the rest position (A, B).

5. Dishwasher according to any one of the preceding claims, **characterised in that** the housing of the rerouting device (14) is provided with guide regions (25) which guide the valve body (15) from the first rest position (A) to the first liquid outlet (17) and from the second rest position to the second liquid outlet (18).

6. Dishwasher according to any one of the preceding claims, **characterised in that** the valve body (15) is of spherical construction.

7. Dishwasher according to any one of the preceding claims, **characterised in that** the valve body (15) consists at least externally of a resilient material in order to be able to better seal the valve seat (19) to the valve body (15).

8. Dishwasher according to any one of the preceding claims, **characterised in that** activation of the control element is carried out electromagnetically.

9. Dishwasher according to any one of the preceding claims, **characterised in that** a spring (26) or a permanent magnet is provided as restoring element of the control element to a starting setting.

10. Dishwasher according to any one of the preceding claims, **characterised in that** nubs preventing bearing of the valve body (15) against the walls of the rerouting device are formed at the walls of the rerouting device in the region of the first and second rest positions (A, B).

## Revendications

1. Lave-vaisselle ménager (1) comprenant
- un réservoir de lavage (2) destiné à loger des produits à laver et au moins deux dispositifs d'arrosage (5, 6) destiné à injecter les produits à laver avec un liquide transporté par une pompe de circulation (7),
- un dispositif d'inversion (14) muni d'une entrée de liquide (16) et de sorties de liquide (17, 18) raccordées respectivement à l'un des dispositifs d'arrosage, ainsi qu'
- un corps de soupape déplaçable (15) qui peut être dirigé par le liquide dans des positions de fermeture (19) pour obturer les sorties de liquide (17, 18) et
- le dispositif d'inversion (14) présentant un organe de commande (20) qui est déplaçable entre une première et une deuxième position et respectivement une des sorties de liquide (17, 18) pouvant être ainsi fermée de manière sélective en raison d'une position instable (C, D) du corps de soupape (15),
**caractérisé en ce que**
le corps de soupape (15) est orientable à partir d'une première ou d'une deuxième position de repos (A, B) dans les positions de fermeture (19) pour obturer l'une des sorties de liquide (17, 18).

2. Lave-vaisselle selon la revendication 1, **caractérisé en ce que** le corps de soupape (15) est déplaçable entre la première et la deuxième positions de repos (A, B) au moyen de l'organe de commande (20).

3. Lave-vaisselle selon la revendication 1 ou 2, **caractérisé en ce que** l'organe de commande (20) sert de guidage pour le corps de soupape (15).

4. Lave-vaisselle selon l'une quelconque des revendications précédentes, **caractérisé en ce que** l'organe de commande (20) est réalisé en tant qu'une bascule (20) disposée de manière rotative dans le boîtier (29), laquelle est apte, en cas d'écoulement du liquide diminuant, faible ou non présent, à guider le corps de soupape (15) de la position de repos (A, B) dans une autre position de repos (A, B) afin d'obturer une sortie de liquide déterminée (17, 18) en fonction de la position de repos (A, B).

5. Lave-vaisselle selon l'une quelconque des revendications précédentes, **caractérisé en ce que** le boîtier du dispositif d'inversion (14) est muni de zones de guidage (25) qui guident le corps de soupape (15) de la première position de repos (A) dans la première sortie de liquide (17) et de la deuxième position de repos dans la deuxième sortie de liquide (18).

6. Lave-vaisselle selon l'une quelconque des revendications précédentes, **caractérisé en ce que** le corps de soupape (15) est réalisé de manière sphérique.

7. Lave-vaisselle selon l'une quelconque des revendications précédentes, **caractérisé en ce que** le corps de soupape (15) est constitué au moins côté extérieur d'un matériau élastique afin de pouvoir mieux étanchéifier le siège de soupape (19) à l'aide du corps de soupape (15).

8. Lave-vaisselle selon l'une quelconque des revendications précédentes, **caractérisé en ce que** la commande de l'organe de commande est réalisée de manière électromagnétique.

9. Lave-vaisselle selon l'une quelconque des revendications précédentes, **caractérisé en ce qu'**un ressort (26) ou un aimant permanent est ménagé en tant qu'élément de rappel de l'organe de commande en une position initiale.

10. Lave-vaisselle selon l'une quelconque des revendications précédentes, **caractérisé en ce que** des ergots (28) sont réalisés sur les parois du dispositif d'inversion dans la zone de la première et de la deuxième positions de repos (A, B), lesquels empêchent un appui du corps de soupape (15) sur les parois du dispositif d'Inversion.
